# EUROPEAN PATENT APPLICATION

(11) **EP 3 588 172 A1**
(43) Date of publication of application: **01.01.2020**
(21) Application number: 18179105.4
(22) Date of filing: 21.06.2018
(51) Int. Cl.: G02C 5/22, G02C 1/08

(54) **SPECTACLE HINGE, TEMPLE UNIT, SPECTACLE RIM UNIT, SPECTACLE FRAME, PAIR OF SPECTACLES AND METHOD FOR MANUFACTURING A SPECTACLE HINGE**

(71) Applicant: Haffmans & Neumeister GmbH, 10785 Berlin (DE)
(72) Inventor: Haffmans, Philipp, 10115 Berlin (DE)
(74) Representative: Schulz Junghans Patentanwälte PartGmbB

(57) **Abstract**

A spectacle hinge (10) for the articulated connection of a temple (12) to a spectacle rim (14) comprises a first hinge part (20) with a temple portion (22) to be connected to a temple (12) and a first connection portion (24) to be connected to a second hinge part (30), and said second hinge part (30) with a spectacle rim portion (32) to be connected to a spectacle rim (14) and a second connection portion (34) to be connected to said first hinge part (20). Said first connection portion (24) and said second connection portion (34) are pivotally connected or connectable.

Said first hinge part (20) and/or said second hinge part (30) is made of a flat material and comprises a twist of at least 60° around a longitudinal axis of at least an elongated portion of said first or second hinge part.

## Description

The invention relates to a spectacle hinge for the articulated connection of a temple to a spectacle rim, a temple unit, a spectacle rim unit, a spectacle frame, a pair of spectacles and a method for manufacturing a spectacle hinge for the articulated connection of a temple to a spectacle rim.

Spectacle temples serve for holding a pair of spectacles safely and comfortably on the wearer's head. Each temple usually extends in an essentially vertical plane at least in the region of the wearer's head in order to provide lateral support against torsion. This furthermore provides a certain flexural strength in their vertical extension plane. The temples' unattached ends are often bent downwards, shaped in a downwardly projecting manner and/or comprise sections with an increased width for providing a reliable hold behind the wearer's ear. In particular the manufacturing of sections with increased width cannot be achieved with temples made of metal wires. In addition, bending of sections with increased width along the main extension plane in order to bending a temple's ends downwards are hard to achieve and, thus, expensive.

In addition, increasingly minimalistic and light-weight spectacle frames are desired due to high wearing comfort and design requirements. Thus, many spectacle temples have thin cross-sections in a great part of their extension which may e.g. be circular, oval, bar-shaped and/or rod-shaped. Metal wire spectacles do not allow any influence on stiffness of the temples or a spectacle rim. Thus, the creative freedom in designing spectacles is limited. On the other hand, a great variety of shapes is desired when designing the spectacle rim, being the most striking and visible part of a pair of spectacles.

The problem to be solved is to provide a spectacle hinge, a temple unit, a spectacle rim unit, a spectacle frame and a pair of spectacles which are easy and cost-effective to manufacture and convenient to use and a method for manufacturing an easy and cost-effective spectacle hinge.

The problem is solved by the spectacle hinge for the articulated connection of a temple to a spectacle rim as claimed in claim 1, the temple unit as claimed in claim 7, the spectacle rim unit as claimed in claim 8, the spectacle frame as claimed in claim 9, the pair of spectacles as claimed in claim 13 and the method for manufacturing a spectacle hinge for the articulated connection of a temple to a spectacle rim as claimed in claim 14. Embodiments of the spectacle hinge are given in dependent claims 2-6, embodiments of the spectacle frame are given in dependent claims 10-12 and an embodiment of the method is given in claim 15.

A first aspect of the invention is a spectacle hinge for the articulated connection of a temple to a spectacle rim. It comprises a first hinge part with a temple portion to be connected to a temple and a first connection portion to be connected to a second hinge part. Said first connection portion is realized as or comprises an element for realizing a pivot axis with a connected or connectable component. Said spectacle hinge furthermore comprises said second hinge part with a spectacle rim portion to be connected to a spectacle rim and a second connection portion to be connected to said first hinge part. Said first connection portion and said second connection portion are pivotally connected or connectable.

Said first hinge part is made of a flat material and comprises a first twist of at least 60°, in particular approximately 90°, around a longitudinal axis of at least an elongated portion of said first hinge part such that said flat material in said temple portion is oriented angled, in particular substantially at right angles, to said flat material in said first connection portion, and a pivot axis of said spectacle hinge is provided angled, in particular substantially at right angles, to said flat material in said first connection portion, and/or said second hinge part is made of a flat material and comprises a second twist of at least 60°, in particular approximately 90°, around a longitudinal axis of at least an elongated portion of said second hinge part such that said flat material in said spectacle rim portion is oriented angled, in particular substantially at right angles, to said flat material in said second connection portion.

Said first hinge part may be part of said temple. In other words, said temple portion may be a section of an integrally formed temple unit comprising the temple and said first hinge part. Said second hinge part may be part of said spectacle rim. In other words, said spectacle rim portion may be a section of an integrally formed spectacle rim unit comprising the spectacle rim and said second hinge part.

A flat material is a piece of material of which the extension in a first and a second direction which is perpendicular to said first direction is greater than the extension of said material in a third direction which is perpendicular to said first and second directions. Thus, a flat material extends in a main extension plane which is spanned by said first and second directions. An orientation or alignment of said flat material refers to the main extension plane of said flat material. In particular, flat steel is meant. Said first and/or second hinge parts are typically oblong elements formed by said flat material.

The first twist and/or the second twist typically realize an angle between 70° and 110°, in particular approximately 90°. The angles are not limited to a specific twisting direction or length of the twisted section. The first twist is realized around a longitudinal axis of at least an elongated portion of said first hinge part between said temple portion and said first connection portion. In particular, said elongated portion is arranged in a transition region of said temple portion and said first connection portion or between the said portions. The second twist is realized around a longitudinal axis of at least an elongated portion of said second hinge part between said spectacle rim portion and said second connection portion. In particular, said elongated portion is arranged in a transition region of said spectacle rim portion and said second connection portion or between the said portions. Said longitudinal axis of at least an elongated portion of said first and/or second hinge part may be bent or curved.

In other words, with respect to a position of a pair of spectacles comprising at least one spectacle hinge according to the invention during use as intended, the extension plane of said flat material in said temple portion of said first hinge part may be aligned essentially vertical while said extension plane of said flat material in said first connection portion may in turns be aligned essentially horizontally. Said pivot axis of said spectacle hinge may be provided in an essentially vertical alignment.

Said first connection portion is realized as or comprises an element for realizing a pivot axis with a connected or connectable component. Said component is in particular said second connection portion. In particular, said second connection portion is also realized as or comprises an element for realizing a pivot axis with a connected or connectable component which is in particular said first connection portion.

Said element or element may be any means for realizing said pivot axis, for example a through hole for receiving an axis element or a fastening section for fastening an axis element. Alternatively, one of the hinge parts may comprise an element which serves as an axis element and the respective other hinge part comprises an element realized as an opening for receiving said axis element. In another embodiment, said elements of both hinge parts are the essentially round outer contours of said hinge parts, wherein both hinge parts are or may be pivotally connected by being surrounded by an externally arranged housing means such as a hollow cylinder in which at least one of said elements is movable. The said hinge parts may alternatively be clamped together by a clamping means.

Said pivot axis is not necessarily a tangible item but may refer to the theoretical pivot axis, while there may be an axis element arranged in order to pivotally connect said first and second connection portions.

Said first connection portion and said temple portion are in particular arranged on opposite sides of said first hinge part. Said second connection portion and said spectacle rim portion are in particular arranged on opposite sides of said second hinge part.

Said second twist does not have to be arranged in proximity to said second connection portion but may also be arranged in the spectacle rim region of said second hinge part if the second hinge part comprises at least parts of said spectacle rim and/or is manufactured integrally with said spectacle rim.

Said spectacle rim portion and/or said temple portion may comprise or be realized by two or more webs which may be aligned essentially parallel to each other.

The first and/or second twist enables for a very small hinge construction. The flat material comprises an increased flexural strength against flexure in the vertical extension plane which makes the temple and/or the spectacle rim bending-resistant.

The first and/or second connection portion is realizable in a very thin, minimalistic design. The increased strength is provided in the vertically aligned regions, so the first and second connection portions do not benefit from this. This is however advantageous, as this enables an optician to perform bends in these sections in order to adapt a pair of spectacles comprising the spectacle hinge according to the invention to the shape of the wearer's head.

Said first and/or second twist may be realized by cold forming. Thus, the resulting strain hardening leads to increased mechanical strength characteristics of said first and/or second hinge part. In addition, the spectacle hinge according to the invention can be manufactured in an easy and cost-efficient manner.

In the case of said first hinge part comprising said first twist, the formation of downwardly protruding form elements and, in particular, sections with increased width of the temples for increasing the hold of the pair of spectacles behind the wearer's ear is simplified, e.g. by cutting it from flat material.

An embodiment of the invention is characterized in that said first hinge part and said second hinge part are pivotally connected by means of a rivet, in particular a hollow rivet.

In particular, said rivet realizes a clearance fit with said first and/or second hinge part. It may realize a press fit with one of said hinge parts. Said rivet may be manufactured from copper or steel.

This provides a pivotal connection which is particularly cost-effective and easy to manufacture.

Said rivet serves at least for fixing said hinge parts along a radial direction. In particular, it also serves for fixing said hinge parts along an axial direction. The terms axial and radial relate to the pivot axis of the hinge part.

In case of a hollow rivet, said spectacle hinge according to the invention has a particularly light weight as well as a light and slim visual appearance. The through hole realized by said hollow rivet may be used as a design element of a pair of spectacles comprising the spectacle hinge according to the invention.

In another embodiment, said first connection portion and said second connection portion comprise an element for realizing a pivot axis which is realized as an opening, in particular a through hole, for receiving an axis element for the pivotal connection of both hinge parts. In particular, said first connection portion and/or said second connection portion comprises a bearing surface which is aligned perpendicular to said pivot axis in order to facilitate a rotational movement of said first hinge part with respect to said second hinge part.

Said first connection portion and said second connection portion may be at least partially complementarily shaped.

Said opening of said first and/or said second connection portion may for example be annularly shaped. In particular, both connection portions are shaped essentially identically. Typically, said first connection portion comprises a first bearing surface which extends essentially in a plane aligned perpendicular to said pivot axis and said second connection portion comprises a second bearing surface which also extends essentially in said plane. In this case both bearing surfaces facilitate a relative rotational movement while sliding on each other in order to realize movement of the spectacle hinge.

In another embodiment, the spectacle hinge comprises on said first hinge part and/or said second hinge part at least one stop element which is configured to limit a rotational movement of said first hinge part with respect to said second hinge part around said pivot axis.

Said stop element serves for limiting a relative rotation of the two hinge parts. It may be arranged on said first hinge part and/or said second hinge part. It is arranged such that in a defined relative angular position of the two hinge parts it realizes a mechanical contact to the respective other hinge part in order to limit its rotational movement.

In particular, said stop element is realized by bending a protruding section from said first or second connection portion such that it extends out of the plane of arrangement of the flat material in the respective connection portion.

This embodiment leads to the advantage that the use of the spectacle hinge and of a pair of spectacles comprising the spectacle hinge according to the invention is more convenient, as the two hinge parts can only be placed in the desired relative rotational positions.

In another embodiment, said stop element is configured for limiting said rotational movement in an angular position of said first hinge part and said second hinge part in which longitudinal axes of said first connection portion and said second connection portion are positioned in an angle of approximately 180° with respect to each other.

In other words, said hinge parts are oriented in opposite directions when the stop element realizes a mechanical contact of both hinge parts which blocks a further rotational movement.

This embodiment limits the movement of the temple to a quarter circle between the closed position in which the temple is aligned essentially parallel to the spectacle rim and the open position in which the temple is aligned essentially at right angles with respect to the spectacle rim. The latter relative position is realized by the 180° angle of the longitudinal axis of respective elongated portions of both connection portions.

In another embodiment, said first hinge part and/or said second hinge part has at least in the region of said first twist and/or said second twist, respectively, a thickness-to-width ratio between 0.3 and 0.9, in particular between 0.45 and 0.75.

The thickness refers to the flat material and is measured perpendicular to its extension plane. The width of the respective element is measured parallel to said extension plane.

In other words, at least said first and/or second twist regions are manufactured from strips of flat material comprising the claimed thickness-to-width ratios. In particular, the temple portion of the first hinge part and the spectacle rim portion of the second hinge part comprise the same ratios as the respective regions of the first and/or second twist.

In particular, for an outer diameter of said first connection portion and/or said second connection portion measured along the pivot axis and the thickness of said flat material, a thickness-to-outer-diameter ratio is between 0.05 and 0.5, in particular between 0.1 and 0.3. Thus, said outer diameter of the respective connection portions may be larger than the absolute height of the spectacle hinge as measured along the pivot axis. As a result, the spectacle hinge according to the invention has a very thin overall impression.

In one embodiment, said first hinge part and/or said second hinge part has a thickness between 0.4 mm and 0.8 mm, in particular between 0.5 mm and 0.7 mm.

The thickness is at least realized in the region of the first twist and/or the second twist. In particular, both hinge parts comprise an essentially constant thickness.

They may be manufactured from a material with the said thickness. In particular, metal or steel strips with approximately 0.6 mm strength are used. This represents an optimum of stability, the stiffness of spectacle hinge parts and the resulting hinge's stiffness.

The width of said flat material may be between 0.8 mm and 1.8 mm, in particular between 0.9 mm and 1.5 mm.

In one embodiment, said first hinge part and/or said second hinge part is manufactured from, flat metal, in particular flat steel. Said metal or steel is typically provided in the form of sheets or strips. It may be cut to size or formed e.g. by laser cutting, cutting, punching and/or etching processes. This embodiment allows for a stable and cost-efficient production. This furthermore serves an esthetic concept, as a 3-dimensional hinge is formed from a flat material.

The first and/or the second hinge part may be manufactured from steel with a modus of elasticity between 180.000 N/mm² and 220.000 N/mm², in particular between 185.000 and 200.000 N/mm². Said steel is in particular a stainless steel.

A second aspect of the invention is a temple unit, comprising a temple and a spectacle hinge according to the invention or a first hinge part of said spectacle hinge. Said first connection portion is connected to said temple.

In other words, one aspect is a temple unit, comprising a first hinge part for realizing a spectacle hinge according to the invention with a temple portion which is connected to said temple and a first connection portion to be connected to a second hinge part of said spectacle hinge. Said first connection portion is realized as or comprises an element for realizing a pivot axis with a connected or connectable component. Said first hinge part is made of a flat material and comprises a first twist of at least 60°, in particular approximately 90°, around a longitudinal axis of at least an elongated portion of said first hinge part such that said flat material in said temple portion is oriented angled, in particular substantially at right angles, to said flat material in said first connection portion, and a pivot axis of said spectacle hinge is provided angled, in particular substantially at right angles, to said flat material in said first connection portion. In particular, said temple is manufactured in one piece from flat metal.

A third aspect of the invention is a spectacle rim unit, comprising a spectacle rim and a spectacle hinge according to the invention or a second hinge part of said spectacle hinge, wherein said second connection portion is connected to said spectacle rim.

In other words, one aspect is a spectacle rim unit, comprising a second hinge part for realizing a spectacle hinge according to the invention with a spectacle rim portion which is connected to said spectacle rim and a second connection portion to be connected to a first hinge part of said spectacle hinge. Said second hinge part is made of a flat material and comprises a second twist of at least 60°, in particular approximately 90°, around a longitudinal axis of at least an elongated portion of said second hinge part such that said flat material in said spectacle rim portion is oriented angled, in particular substantially at right angles, to said flat material in said second connection portion. In particular, said spectacle rim is manufactured in one piece from flat metal. Said second connection portion may be realized as or comprise an element for realizing a pivot axis with a connected or connectable component.

In other words, said spectacle rim unit or temple unit may comprise a first hinge part which is configured to form a spectacle hinge according to the invention together with a corresponding second hinge part. It may alternatively comprise a second hinge part which is configured to form a spectacle hinge according to the invention together with a corresponding first hinge part. Alternatively, it may comprise the whole spectacle hinge according to the invention.

A third aspect of the invention is a spectacle frame, comprising two temples and a spectacle rim. At least one of said temples, in particular both temples, are pivotally connected with said spectacle rim by means of a spectacle hinge according to the invention.

Typically, said spectacle hinges are aligned such that the both temples are in essentially parallel alignment when each temple is folded or, in other words, when each temple is aligned parallel to an extension plane of said spectacle rim.

In particular, each temple portion is connected to the respective temple and each spectacle rim portion is connected to the spectacle rim.

In the region of the second twist, in the proximity of said second twist and/or in the region of said spectacle rim portion, typically, a 90° bend is realized, representing the passage of the flat material from second connection portion to the spectacle rim.

In particular, said first hinge part and/or said second hinge part, is manufactured from flat material, in particular from flat metal. In particular, the entire spectacle frame is manufactured from flat material.

In another embodiment, said temple portion is an integral component of said temple and/or said spectacle rim portion is an integral component of said spectacle rim. In other words, said temple may be formed integrally with said temple portion and/or said spectacle rim may be formed integrally with said spectacle rim portion.

This embodiment yields the advantage of an easy and cost-efficient manufacturing as well as a consistent overall impression of the spectacle frame.

In another embodiment, said temple and/or said spectacle rim is manufactured from steel, in particular stainless steel.

Said material may be austenitic stainless steel. Said material may comprise 10%-20% Chromium, 5%-10% Nickel, 0.5%-5% Molybdenum, up to 5% Copper, up to 2 % Titanium, up to 1% Aluminum, up to 0.2% or 0.1% or 0.05% Carbon, up to 2% Silicon, up to 2% Manganese, below 0.04% Phosphorus and/or below 0.005% Sulphur. This embodiment leads to a resistant and durable material and, thus, to an improved durability of the spectacle frame.

The material's tensile strength may be between 1700 N/mm² and 2050 N/mm² in a cold rolled state and may be increased to up to 2300 N/mm² by heat treatment. In another embodiment, said tensile strength may be between 950 N/mm² and 1850 N/mm² in a cold rolled state and may be increased up to 2600 N/mm² by heat treatment.

Said material has the advantage that it is a deformable yet flexible material. In particular, the spectacle frame is also manufactured from said steel. This renders the spectacles convenient to use and facilitates insertion of the lenses.

In another embodiment of the spectacle frame, said temple and/or said spectacle rim is manufactured from flat material. In particular, said temples and said spectacle rim are manufactured from flat material. This embodiment also leads to a consistent overall impression of the spectacle frame as well as to a particularly easy and cost-efficient manufacturing.

In yet another embodiment, said spectacle rim comprises at least one aperture for receiving a lens and said spectacle rim comprises a slit extending radially from said aperture for enabling a relative movement of a first area of said spectacle rim with respect to a second area of said spectacle rim.

In other words, said slit separates said first area and said second area. This serves for a facilitated mounting or dismounting at least one lens into said pair of spectacles. The radial extension of said slit from said aperture refers to an axis of said aperture which is aligned perpendicular to a plane defined by said aperture.

This embodiment allows for a particularly easy adaptation of a pair of spectacles comprising the spectacle frame according to the invention to a specific wearer.

In yet another embodiment of the spectacle frame, said spectacle frame comprises at least one, in particular two, nose parts and a connecting element which connects said nose parts with said spectacle rim. Said connecting element is made of a flat material and comprises a third twist of at least 60°, in particular approximately 90°, around a longitudinal axis of at least an elongated portion of said connecting element.

The third twist reduces the space required by the connecting elements or, in other words, leads to an increased distance between the connecting elements such that more space is provided for the arrangement of the wearer's nose in comparison to the spectacle frames known from prior art. In addition, this increases the design freedom of the spectacle frame.

Said nose part may comprise a form element, in particular a through hole, for equipping it with a nose pad which may be manufactured from an elastic material.

In another embodiment, the temples are manufactured from steel with a modus of elasticity between 180.000 N/mm² and 220.000 N/mm², in particular between 185.000 and 200.000 N/mm². Thus, they are easily and effectively adjustable to the user, e.g. fitting it to the ear height and/or shape of the nose. In addition, mounting and dismounting of the lenses is facilitated. It has furthermore shown that the defined elasticity leads to a dimensional stability while enabling the temples to apply the desired pressure to the wearer's head.

Also, nose parts may be made of the same material so they are easily adjustable. In one embodiment, said steel is used for all parts of the pair of spectacles except for the lenses and, if applicable, except for plastic parts e.g. on nose parts and/or temples. Thus, the spectacles require especially low maintenance.

A fourth aspect of the invention is a pair of spectacles which comprises a spectacle frame according to the invention and at least one lens, in particular two lenses, which are supported by said spectacle rim.

In particular, said spectacle rim comprises at least one aperture for receiving a lens and said lens is supported within said aperture. Said lens or lenses is or are non-positively and/or positively connected to said spectacle rim. In case of one lens it may extend over the whole field of view and cover both eyes during use as intended.

A fifth aspect of the invention is a method for manufacturing a spectacle hinge for the articulated connection of a temple to a spectacle rim. In a first alternative, it comprises providing a pre-stage first hinge part made of a flat material and having a temple portion to be connected to a temple and a first connection portion to be connected to a second hinge part. Said first connection portion is realized as or comprises an element for realizing a pivot axis with a connected or connectable component. Said method furthermore comprises providing a first hinge part by forming, in particular twisting, at least an elongated portion of said pre-stage first hinge part in order to realize a first twist of at least 60°, in particular approximately 90°, around a longitudinal axis of at least said portion of said pre-stage first hinge part. In addition, it comprises providing said second hinge part with a spectacle rim portion to be connected to said spectacle rim and a second connection portion to be connected to said first hinge part, and pivotally connecting said first connection portion and said second connection portion.

In addition or in a second alternative, the method comprises providing a pre-stage second hinge part made of a flat material and having a spectacle rim portion to be connected to a spectacle rim and a second connection portion to be connected to a first hinge part. It furthermore comprises providing a second hinge part by forming, in particular twisting, at least an elongated portion of said pre-stage second hinge part in order to realize a second twist of at least 60°, in particular approximately 90°, around a longitudinal axis of at least said portion of said pre-stage second hinge part. In addition, it comprises providing said first hinge part with a temple portion to be connected to a temple and a first connection portion to be connected to said second hinge part, and pivotally connecting said first connection portion and said second connection portion.

In particular, said method is suitable for manufacturing a spectacle hinge according to the invention.

In one embodiment of the method, providing at least a part of a contour of said pre-stage first hinge part, said pre-stage second hinge part, said first hinge part and/or said second hinge part, in particular at least said first connection portion and/or said second connection portion, is realized by means of cutting, e.g. laser cutting, of said flat material. The contour means the outer shape of the respective element.

The invention is further illustrated and characterized by the following figures that show examples from which further embodiments and advantages can be drawn. These figures are meant to illustrate the invention but not to limit its scope.
Figure 1 shows a perspective view of a spectacle hinge according to a first embodiment of the invention,
Figure 2 shows an exploded perspective view of a spectacle hinge according to a second embodiment of the invention from above,
Figure 3 shows an exploded perspective view of the spectacle hinge of Figure 2 from below,
Figure 4 shows a perspective view of the spectacle hinge of Figure 3 with the temple in a folded state,
Figure 5 shows a top view of the spectacle hinge of Figure 1,
Figure 6 shows a perspective view of a detail of a spectacle rim with features according to the invention, and
Figure 7 shows a perspective view of a spectacle frame according to the invention.

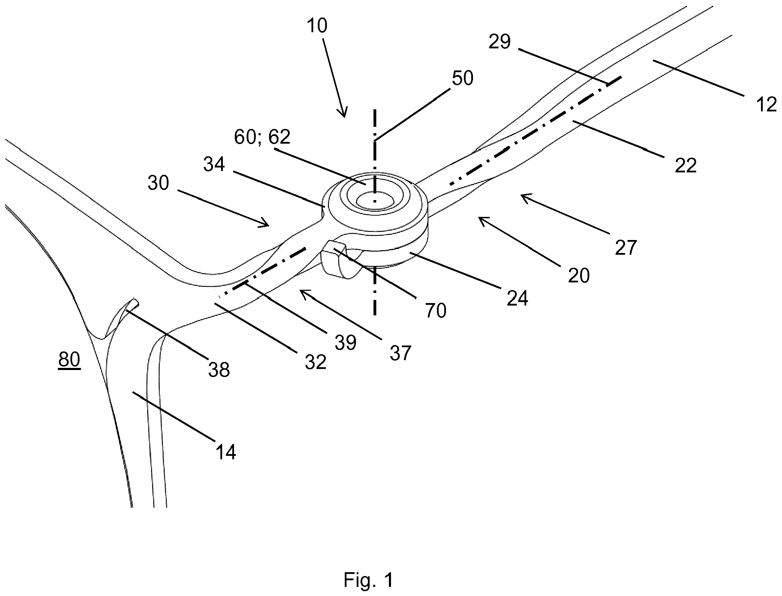

Figure 1 shows a detail of a pair of spectacles from a front above perspective. Said pair of spectacles comprises the spectacle hinge 10 according to the invention. Said spectacle hinge 10 connects the temple 12 to the spectacle rim 14 which may also be referred to as spectacle front. A first hinge part 20 of said spectacle hinge 10 is formed integrally with a temple 12 of said pair of spectacles. In other words, a temple unit is realized as a one-piece component, comprising a temple portion 22 which is connected to said temple 12 by a seamless transition and a first connection portion 24 to be connected to the second hinge part 30. Said first connection portion 24 is realized as an annular element with a through hole.

A second hinge part 30 of said spectacle hinge 10 is formed integrally with the spectacle rim 14. In other words, a spectacle rim unit is realized as a one-piece component, comprising a spectacle rim portion 32 which is connected to said spectacle rim 14 by seamless transition and a second connection portion 34 to be connected to said first connection portion 24 of said first hinge part 20. Said second connection portion 34 is also realized as an annular element with a through hole. Both connection portions 24, 34 are aligned parallel to each other and are pivotally connected by means of a rivet 60, namely a hollow rivet 62, such that a relative rotation around the pivot axis 50 is possible.

The first hinge part 20, the second hinge part 30, the spectacle rim 14 and the temple 12 are entirely made of a flat material, namely flat steel. The first hinge part 20 comprises a first twist 27 of essentially 90° around its longitudinal axis 29. Therefore, said flat material in said temple portion 22 and said temple 12 is oriented substantially vertically and at right angles to said flat material in said first connection portion 24. Thus, an increased flexural strength in the vertical extension plane is realized in said temple 12. The formation of downwardly protruding form elements in order to increase the hold of the pair of spectacles behind the wearer's ear is simplified.

Just as the flat material in said temple portion 22 and said temple 12, said pivot axis 50 is also aligned in an essentially vertical position with respect to the shown position of the pair of spectacles during use as intended.

In analogy to the first hinge part 20, the second hinge part 30 comprises a second twist 37 of essentially 90° around its longitudinal axis 39. Said second twist 37 is arranged between said spectacle rim portion 32 and said second connection portion 34. Said second twist 37 allows for an upright or vertical alignment of said flat material in said spectacle rim portion 32 and said spectacle rim 14. This facilitates shaping and forming of said spectacle rim 14 and allows for a great creative freedom in designing said spectacle rim 14.

In this embodiment a stop element 70 is arranged on an unattached end of said first connection portion 24. It serves for blocking a rotational movement of said first hinge part 20 with respect to said second hinge part 30 in the shown relative alignment of both hinge parts 20, 30, where both longitudinal axes 29, 39 are positioned in an angle of essentially 180° with respect to each other. This is realized by a mechanical contact of said stop element 70 with the second hinge part 30 in a section between said second twist 37 and said second connection portion 34 which prevents further rotation of said temple 12.

Said spectacle rim 14 supports two lenses 80 one of which is shown in figure 1 and indicated by a thin line in the lower left. The lenses are received by a suitable apertures of the spectacle rim 14. A slit 38 is arranged in spectacle rim 14 in order to allow for a defined relative movement of different areas of said spectacle rim 14 to each other by bending in order to mount or dismount said lenses 80 into said pair of spectacles. This slit extends radially from the aperture for receiving a lens 80.

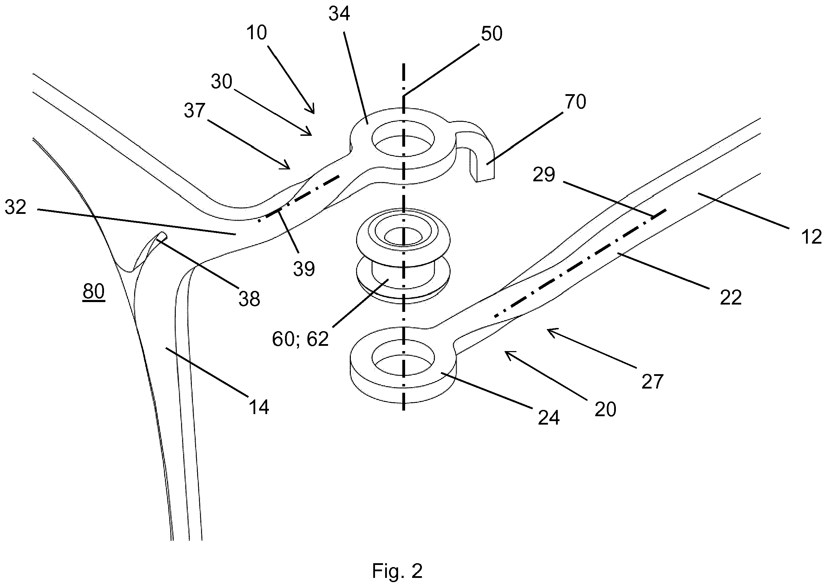

Figure 2 shows a different embodiment of the invention in an exploded view in a similar perspective. It can be seen that the first connection portion 24 and the second connection portion 34 are realized as annular elements which are aligned parallel to each other. The rivet 60 forming the pivot axis 50 of said spectacle hinge 10 is visible. In this embodiment, the stop element 70 is a part of the second hinge part 30 and is configured for contacting said first hinge part 20 in the shown relative angular position.

Each of said first connection portion 24 and said second connection portion 34 comprises a through hole for receiving an axis element, namely said hollow rivet 62, for the pivotal connection of both hinge parts 20, 30. The surface of said first connection portion 24 facing upwards and the surface of said second connection portion 34 facing downwards are both aligned in a plane which is perpendicular to said pivot axis 50. Thus, they are complementarily shaped.

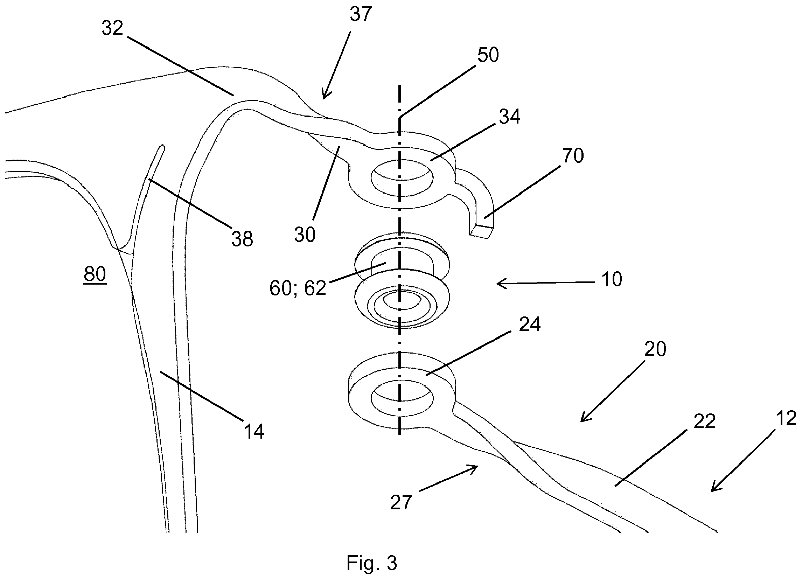

Figure 3 shows the same spectacle hinge 10 from below. In this view it is especially visible that the temple portion 22 and the temple 12 are in a vertical alignment just as the spectacle rim portion 32 and the spectacle rim 14, while the flat material is horizontally aligned in the respective connection portions 24, 34.

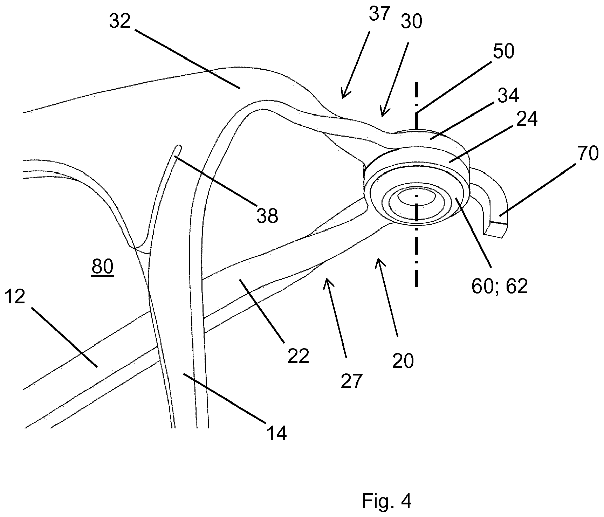

The same spectacle hinge 10 is shown in the same perspective in figure 4. However, in this perspective view, said temple 12 is folded such that it realizes an essentially parallel alignment with respect to the spectacle rim 14 and the lenses 80.

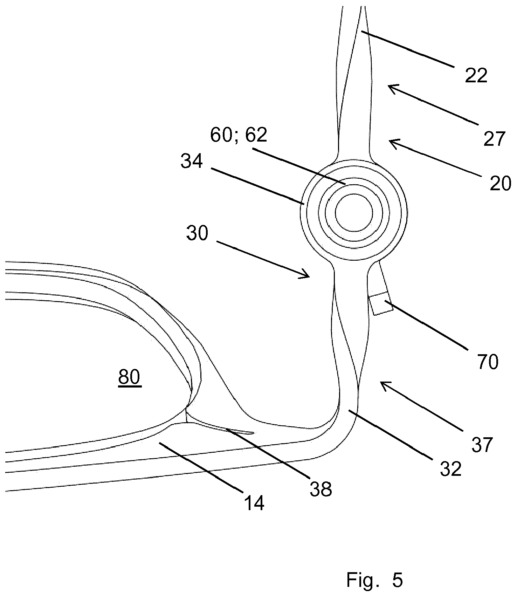

Figure 5 shows the spectacle hinge of figure 1 in a top view. The spectacle rim 14 is visible due to an angle slightly smaller than 90° which is realized between the plane of the spectacle rim 14 and a plane defined by the temples 12.

The flat material of said first hinge part 20 in the region of said first twist 27 and said second hinge part 30 in the region of said second twist 37 has a thickness-to-width ratio of approximately 0.6. It is also apparent that said first twist 27 has a more elongate shape than said second twist 37.

In the region of said first connection portion of said first hinge part 20 which is arranged behind said second connection portion in this view and said second connection portion 34 of said second hinge part 39, said flat material has a thickness-to-outer-diameter ratio of approximately 0.18. Thus, said outer diameter of the respective connection portions 24, 34 is more than the absolute heigth of the spectacle hinge 10 as measured along the pivot axis. As a result, the spectacle hinge 10 as shown has a very thin overall impression in side view.

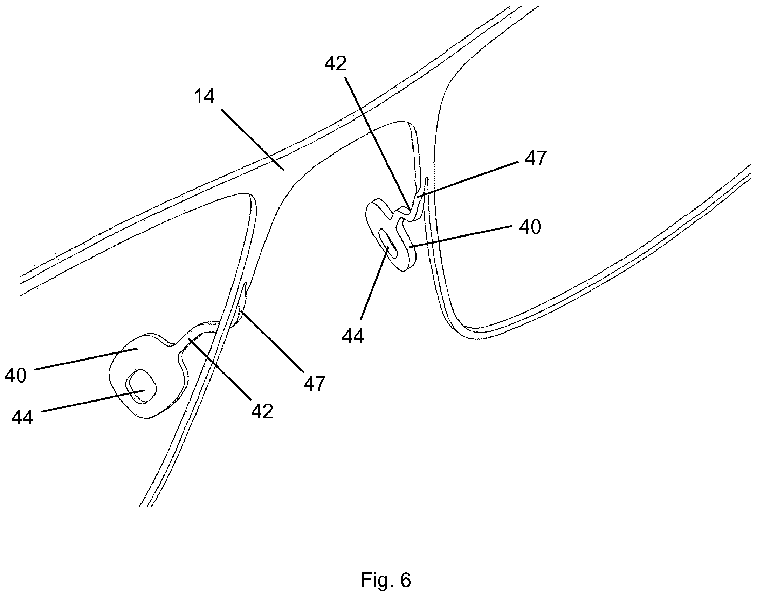

Figure 6 shows a detail of a spectacle rim 14 of a pair of spectacles according to the invention. Said pair of spectacles comprises two nose parts 40 each of which is connected to said spectacle rim 14 by means of a connecting element 42. Each connecting element 42 comprises a third twist 47 along its longitudinal axis. This allows for a space-saving arrangement of said nose parts 40, as in contrast to nose parts known from prior art, the connecting elements 42 do not protrude in the area in which the wearer's nose is to be positioned during use of the pair of spectacles as intended.

Each of said nose parts 40 comprises a form element 44 for attaching a nose pad, if desired. This may for example be manufactured from an elastic material. Said form elements 44 are realized as through holes for introducing a suitable connecting portion of said nose pad in order to realize a positive connection.

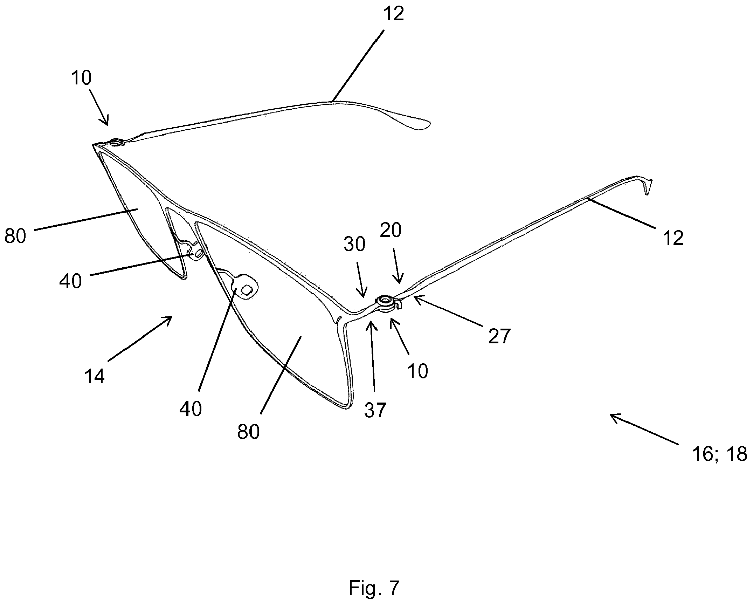

A pair of spectacles 18 according to the invention is shown in figure 7. It comprises a spectacle frame 16 comprising a spectacle rim 14 supporting two lenses 80 and two temples 12. Each of the two temples 12 is connected to said spectacle rim 14 by means of a spectacle hinge 10 according to the invention.

**List of Reference Signs**

| | |
|---|---|
| Spectacle Hinge | 10 |
| Temple | 12 |
| Spectacle Rim | 14 |
| Spectacle Frame | 16 |
| Pair of Spectacles | 18 |
| First Hinge Part | 20 |
| Temple Portion | 22 |
| First Connection Portion | 24 |
| First Twist | 27 |
| Longitudinal Axis | 29 |
| Second Hinge Part | 30 |
| Spectacle Rim Portion | 32 |
| Second Connection Portion | 34 |
| Second Twist | 37 |
| Slit | 38 |
| Longitudinal Axis | 39 |
| Nose Part | 40 |
| Connecting Element | 42 |
| Form Element | 44 |
| Third Twist | 47 |
| Pivot Axis | 50 |
| Rivet | 60 |
| Hollow Rivet | 62 |
| Stop Element | 70 |
| Lens | 80 |

## Claims

1. A spectacle hinge (10) for the articulated connection of a temple (12) to a spectacle rim (14), comprising
- a first hinge part (20) with a temple portion (22) to be connected to a temple (12) and a first connection portion (24) to be connected to a second hinge part (30), wherein said first connection portion (24) is realized as or comprises an element for realizing a pivot axis (50) with a connected or connectable component, and
- said second hinge part (30) with a spectacle rim portion (32) to be connected to a spectacle rim (14) and a second connection portion (34) to be connected to said first hinge part (20),
wherein said first connection portion (24) and said second connection portion (34) are pivotally connected or connectable,
**characterized in that** said first hinge part (20) is made of a flat material and comprises a first twist (27) of at least 60°, in particular approximately 90°, around a longitudinal axis (29) of at least an elongated portion of said first hinge part (20) such that said flat material in said temple portion (22) is oriented angled, in particular substantially at right angles, to said flat material in said first connection portion (24), said pivot axis (50) of said spectacle hinge (10) is provided angled, in particular substantially at right angles, to said flat material in said first connection portion (24),
and/or that said second hinge part (30) is made of a flat material and comprises a second twist (37) of at least 60°, in particular approximately 90°, around a longitudinal axis (39) of at least an elongated portion of said second hinge part (30) such that said flat material in said spectacle rim portion (32) is oriented angled, in particular substantially at right angles, to said flat material in said second connection portion (34).

2. The spectacle hinge (10) according to claim 1, **characterized in that** said first hinge part (20) and said second hinge part (30) are pivotally connected by means of a rivet (60), in particular a hollow rivet (62).

3. The spectacle hinge (10) according to one of the preceding claims, **characterized in that** said first connection portion (24) and said second connection portion (34) comprise an element for realizing a pivot axis (50) which is realized as an opening, in particular a through hole, for receiving an axis element for the pivotal connection of both hinge parts (20, 30),
wherein, in particular, said first connection portion (24) and/or said second connection portion (34) comprises a bearing surface which is aligned perpendicular to said pivot axis (50) in order to facilitate a rotational movement of said first hinge part (20) with respect to said second hinge part (30).

4. The spectacle hinge (10) according to one of the preceding claims, **characterized in that** said spectacle hinge (10) comprises on said first hinge part (20) and/or said second hinge part (30) at least one stop element (70) which is configured to limit a rotational movement of said first hinge part (20) with respect to said second hinge part (30) around said pivot axis (50).

5. The spectacle hinge (10) according to claim 4, wherein said stop element (70) is configured for limiting said rotational movement in an angular position of said first hinge part (20) and said second hinge part (30) in which longitudinal axes (29, 39) of said first connection portion (24) and said second connection portion (34) are positioned in an angle of approximately 180° with respect to each other.

6. The spectacle hinge (10) according to one of the preceding claims, **characterized in that** said first hinge part (20) and/or said second hinge part (30) has at least in the region of said first twist (27) and/or said second twist (37), respectively, a thickness-to-width ratio between 0.3 and 0.9, in particular between 0.45 and 0.75.

7. A temple unit, **characterized in that** it comprises a temple (12) and a spectacle hinge (10) as claimed in one of the claims 1-6 or a first hinge part (20) of said spectacle hinge (10), wherein said first connection portion (24) is connected to said temple (12).

8. A spectacle rim unit, **characterized in that** it comprises a spectacle rim (14) and a spectacle hinge (10) as claimed in one of the claims 1-6 or a second hinge part (30) of said spectacle hinge (10), wherein said second connection portion (34) is connected to said spectacle rim (14).

9. A spectacle frame (16), comprising two temples (12) and a spectacle rim (14), **characterized in that** at least one of said temples (12), in particular both temples (12), are pivotally connected with said spectacle rim (14) by means of a spectacle hinge (10) as claimed in one of the claims 1-6.

10. The spectacle frame (16) according to claim 9, **characterized in that** said temple portion (22) is an integral component of said temple (12) and/or said spectacle rim portion (32) is an integral component of said spectacle rim (14).

11. The spectacle frame (16) according to one of the claims 9-10, **characterized in that** said temple (12) and/or said spectacle rim (14) is manufactured from flat material.

12. The spectacle frame (16) according to one of the claims 9-11, **characterized in that** said spectacle rim (14) comprises at least one aperture for receiving a lens (80), wherein said spectacle rim (14) comprises a slit extending radially from said aperture for enabling a relative movement of a first area of said spectacle rim (14) with respect to a second area of said spectacle rim (14).

13. A pair of spectacles (18), **characterized in that** it comprises a spectacle frame (16) as claimed in one of the claims 9-12 and at least one lens (80), in particular two lenses (80), which are supported by said spectacle rim (14).

14. A method for manufacturing a spectacle hinge (10) for the articulated connection of a temple (12) to a spectacle rim (14), comprising the steps of
- Providing a pre-stage first hinge part made of a flat material and having a temple portion (22) to be connected to a temple (12) and a first connection portion (24) to be connected to a second hinge part (30), wherein said first connection portion (24) is realized as or comprises an element for realizing a pivot axis (50) with a connected or connectable component,
- Providing a first hinge part (20) by forming, in particular twisting, at least an elongated portion of said pre-stage first hinge part in order to realize a first twist (27) of at least 60°, in particular approximately 90°, around a longitudinal axis (29) of at least said portion of said pre-stage first hinge part,
- Providing said second hinge part (30) with a spectacle rim portion (32) to be connected to said spectacle rim (14) and a second connection portion (34) to be connected to said first hinge part (20), and
- Pivotally connecting said first connection portion (24) and said second connection portion (34),
and/ or
- Providing a pre-stage second hinge part made of a flat material and having a spectacle rim portion (32) to be connected to a spectacle rim (14) and a second connection portion (34) to be connected to a first hinge part (20),
- Providing a second hinge part (30) by forming, in particular twisting, at least an elongated portion of said pre-stage second hinge part in order to realize a second twist (37) of at least 60°, in particular approximately 90°, around a longitudinal axis (39) of at least said portion of said pre-stage second hinge part,
- Providing said first hinge part (20) with a temple portion (22) to be connected to a temple (12) and a first connection portion (24) to be connected to said second hinge part (30), and
- Pivotally connecting said first connection portion (24) and said second connection portion (34).

15. The method for manufacturing a spectacle hinge (10) according to claim 14, **characterized in that** providing at least a part of a contour of said pre-stage first hinge part, said pre-stage second hinge part, said first hinge part and/or said second hinge part, in particular at least said first connection portion and/or said second connection portion, is realized by means of cutting, e.g. laser cutting, of said flat material.
